# EUROPEAN PATENT SPECIFICATION

(11) **EP 0 454 355 B1**
(45) Date of publication and mention of the grant of the patent: **27.12.1996**
(21) Application number: 91303461.7
(22) Date of filing: 18.04.1991
(51) Int. Cl.: H04N 5/14, H04N 3/32

(54) **Image signal processing apparatus for edge enhancement**
Gerät zur Verarbeitung von Bildsignalen zwecks Verbesserung der Kantensteilheit
Appareil de traitement de signal d'image pour l'accentuation de contours

(30) Priority: 27.04.1990 JP 111961/90; 27.04.1990 JP 111964/90; 27.04.1990 JP 111977/90
(43) Date of publication of application: 30.10.1991
(73) Proprietor: CANON KABUSHIKI KAISHA, Tokyo (JP)
(72) Inventor: Minoura, Nobuo, c/o Canon Kabushiki Kaisha, Tokyo (JP); Kanashiki, Masaaki, c/o Canon Kabushiki Kaisha, Tokyo (JP)
(74) Representative: Beresford, Keith Denis Lewis

(56) References cited:
- EP-A- 0 201 245
- EP-A- 0 340 648
- US-A- 4 422 094
- PATENT ABSTRACTS OF JAPAN, vol. 12, no. 200 (E-619), 9th June 1988; & JP-A-62 299 180 (MITSUBISHI) 26-12-1987

## Description

The present invention relates to an image signal processing apparatus to process an image signal, and to a television receiver incorporating such an apparatus.

There is already known an image signal processing apparatus which improves the image quality of a TV image receiver.

As a method to improve picture quality of a TV image receiver, there is known a method to improve picture quality by improving the frequency characteristics of the image amplifying circuit or by a system of delay type outline correction, or edge enhancement, circuit.

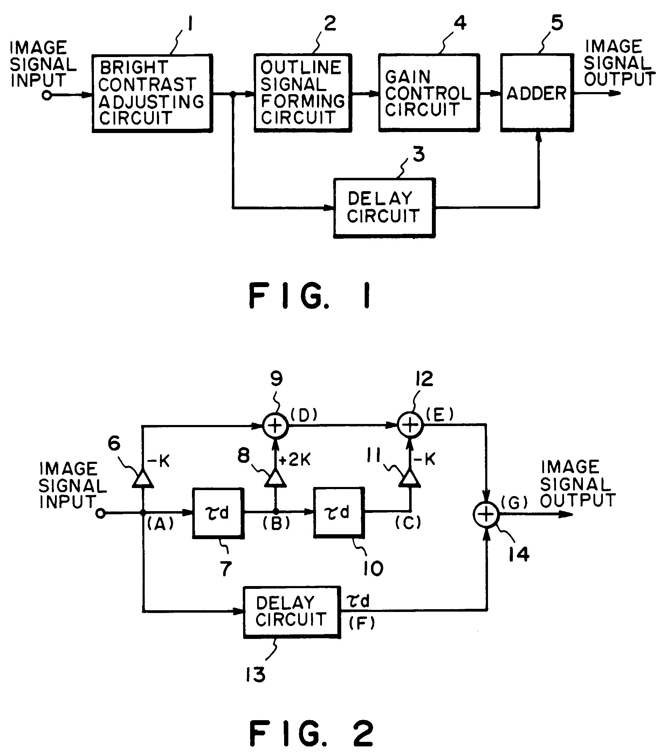

Fig. 1 indicates an example of the basic composition of a conventional outline correction circuit.

In Fig. 1, the input image signal receives adjustment of brightness and contrast at a brightness/contrast adjusting circuit 1 and then it is supplied to an outline signal forming circuit 2 and a delay circuit 3.

At outline signal forming circuit 2, the signals corresponding to the outline section of the image among all the input signals of the image are extracted and they are supplied to a gain control circuit 4 at a later stage.

Gain control circuit 4 is so constructed that it can control the gain of the outline signal which is supplied by the operating unit not shown in the drawing and the outline signal with thus controlled gain is supplied to an adder 5.

To the adder 5 is also supplied the image signal whose brightness and contrast have been adjusted by the brightness/contrast adjusting circuit 1, after being delayed for a preset time by the delay circuit 3 and by further addition of the outline signal supplied by the gain control circuit 4 and the image signal supplied by the delay circuit 3, an image signal with corrected outline is output at the said adder 5.

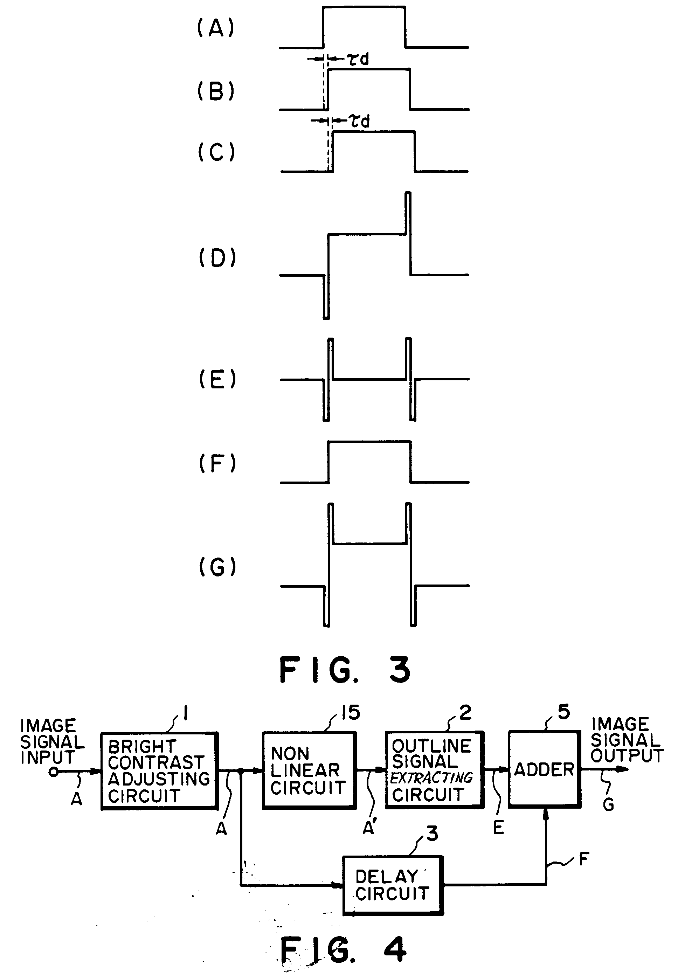

Fig. 2 shows an example of a composition of a horizontal outline correction circuit while Fig.3 is a drawing to indicate the signal waveform of the unit with the composition shown in Fig. 2.

In Fig. 2, image input signal (A) gives the image signal output to which the outline signal shown in Fig. 3(G) has been added by the delay circuit 7, 10, 13, coefficient multiplier 6, 8, 11 and adder 9, 12, 14.

However with the aforesaid conventional outline correction circuit, when a certain correction amount is set, the same outline correction is made irrespective of the brightness level (dark part, bright part) of the image signal and consequently, should the outline be over-emphasised, outline emphasis becomes too remarkable at the dark part producing a glittering image, while at the bright part, particularly where white letter etc. is produced, blooming occurs, resulting in deterioration of the picture quality.

A method to emphasise the outline of the image by digitizing the image signal, has been proposed by Japanese Patent Application Laid-Open No. JP-A-59-023974.

However in the case of such a conventional method, a delay circuit where a plural number of delay signals each of which is deviated in timing by one horizontal scanning period is employed, the correlation of the plural number of delay signals output by the delay circuit is calculated and the signals corresponding to such correlation are output, thus a plural number of costly line memories are required, resulting in an increase of cost and besides, since outline emphasis is made corresponding to such correlations by calculating the correlation between image signals in each horizontal scanning period, a problem occurs that sufficient outline emphasis can not be made depending on the contents of the image.

There is disclosed in JP-A-62 299 180 (Patent Abstracts of Japan) an arrangement in which an outline correction signal is first formed from the input image signal and then converted into a non-linear form according to the value of a control signal output from a level detection circuit, the converted outline correction signal then being added to the input image signal by an additing circuit. In particular the image signal processing apparatus disclosed therein comprises:
outline signal forming means responsive to an image signal to form, from said image signal, an outline signal for emphasising the outline of the image represented by said image signal, said outline signal having a peak amplitude smaller for an outline at dark or bright parts of said image than for an outline at a part of said image of intermediate brightness, wherein said outline signal is output from said outline signal forming means after a delay relative to said image signal.
delay means for delaying said image signal by said delay ; and
adding means for adding said outline signal to the delayed image signal output by said delay means;

Another arrangement of image signal processing apparatus is disclosed in United States Patent US-A-4,422,094. As disclosed therein, vertical detail is extracted from an image signal by a combination of comb and band-pass filters, and the signal representing this detail is non-linearly processed using a memory table under user control. The non-linearly processed detail signal is then added to the luminance signal.

The image signal processing apparatus in accordance with the present invention, having the particular features of JP-A-62999180 just mentioned, is characterised in that:
said outline signal forming means comprises:
non-linear processing means, responsive to said image signal, for compressing its level at portions corresponding to dark parts and bright parts of said image, and for expanding its level at portions corresponding to parts of said image of intermediate brightness; and
outline signal extracting means responsive to the non-linearly processed image signal output by said non-linear processing means, to form therefrom said outline signal.

How the invention may be carried out will now be described by way of example only and with reference to the accompanying drawings in which:

In the drawings:
Fig. 1 is a drawing to show the basic composition of a conventional outline correction circuit;
Fig. 2 is a drawing to show the composition of the conventional horizontal outline correction circuit;
Fig. 3 is a drawing to show the signal waveform of various parts of horizontal outline correction circuit shown in Fig. 2;
Fig. 4 is a drawing to show the arrangement of an outline correction circuit as a first embodiment of the present invention;
Figs. 5A-5E are drawings to show the non-linear characteristics at non-linear part of the outline correction circuit and signal waveforms at each unit shown in Fig. 4 above;
Fig. 6 is a drawing to show the arrangement of the outline correction circuit of a second embodiment of the present invention;
Figs. 7A - 7G are drawings to show the non-linear characteristics of the non-linear circuit of the outline correction circuit and signal waveforms at each unit shown in Fig. 6 above.

The present invention shall be described with reference to preferred embodiments. The following description is given by way of example only.

Fig. 4 shows the composition of the outline correction circuit representing the first embodiment. In Fig. 4, element 1 is bright ness/contrast adjusting circuit, 2 is an outline, or profile, signal extracting circuit, 3 is a delay circuit, 5 is an adder and 15 is a non-linear circuit.

In Fig. 4, the input image signal is supplied to the brightness/contrast adjusting circuit 1 to execute adjustment of brightness and contrast. The image signal A which is obtained by such adjustment of brightness and contrast is fed to the non-linear circuit 15 and delay circuit 3 and the image signal F which has been delayed by circuit 3 is supplied to adder 5.

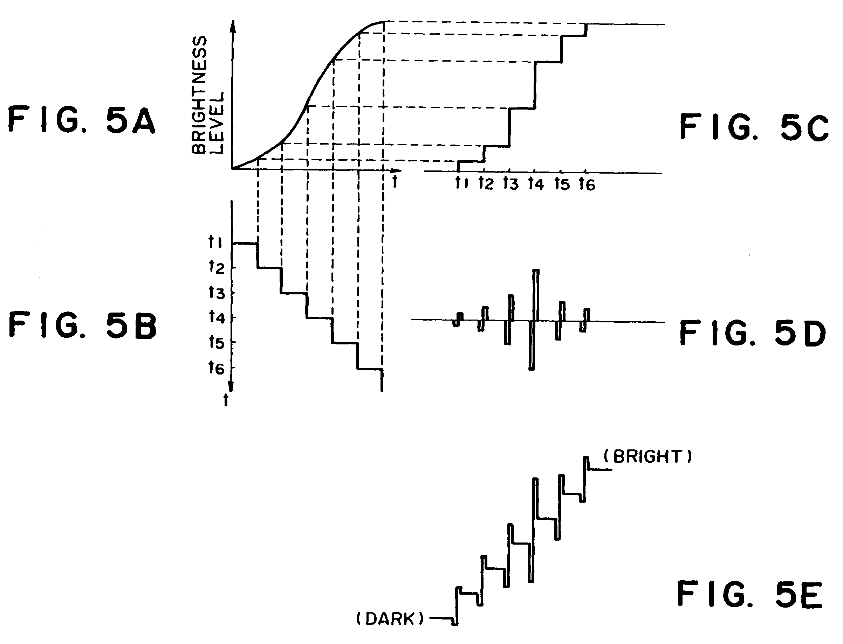

Non-linear circuit 15 has non-linear characteristics as shown in FIG. 5A, and assuming that the stepped waveform image signal as shown in FIG. 5B is supplied to the non-linear circuit 15, an image signal having a waveform as shown in FIG. 5C is output by the non-linear circuit 15.

As stated above, the image signal output by the non-linear circuit 15 has such characteristics that, as shown in FIG. 5C, the signal level is compressed for a signal portion indicating a dark area of the image (i.e., the area where the signal level is small) and a signal portion indicating a bright area of the image (i.e., the area where signal level is large), while the signal level is expanded for a signal portion indicating an area where the brightness of the image is medium (i.e., at around the area where signal level is medium).

The image signal indicated in FIG. 5C is supplied to the outline signal extracting circuit 2 and an outline signal E as shown in FIG. 5D is output by the outline signal extracting circuit 2 and fed to the adder 5.

At adder 5, by adding the outline signal E supplied by outline signal extracting circuit 2 and the image signal F delayed for a certain time by the delay circuit 3, an image signal G of which the outline is emphasized as shown in FIG. 5E is output.

As stated above, by providing the non-linear circuit 15 prior to the outline signal extracting circuit 2, it is possible to suppress the amount of outline emphasis for signals representing a dark part and a bright part of the image and realize the optimum outline emphasis in a wide range from a dark scene to a bright scene of the image. Thus glittering in a dark scene or blooming (smashing of white or blur) in the bright scene etc. are prevented and in a scene where the brightness is normal, an appropriate emphasis of the outline is obtained.

In FIG. 4, the elements which are equivalent to those of FIG. 1 are given the same reference number.

Hereunder is described a second embodiment of the present invention.

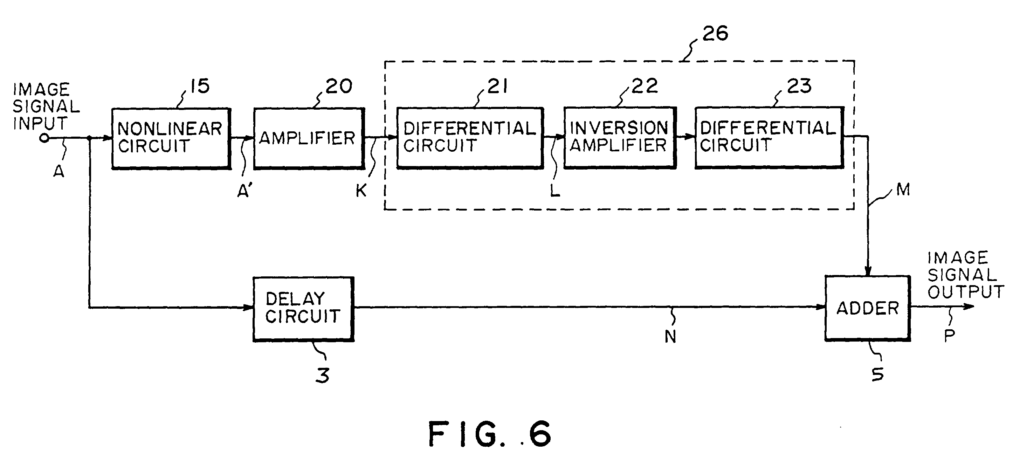

FIG. 6 is a drawing to show the composition of the outline correction circuit of the second embodiment. In FIG. 6, element 15 is a non-linear circuit; 20 is an amplifier, 21,23 are differential circuits; 22 is an inverter; 3 is a delay circuit and 5 is an adder.

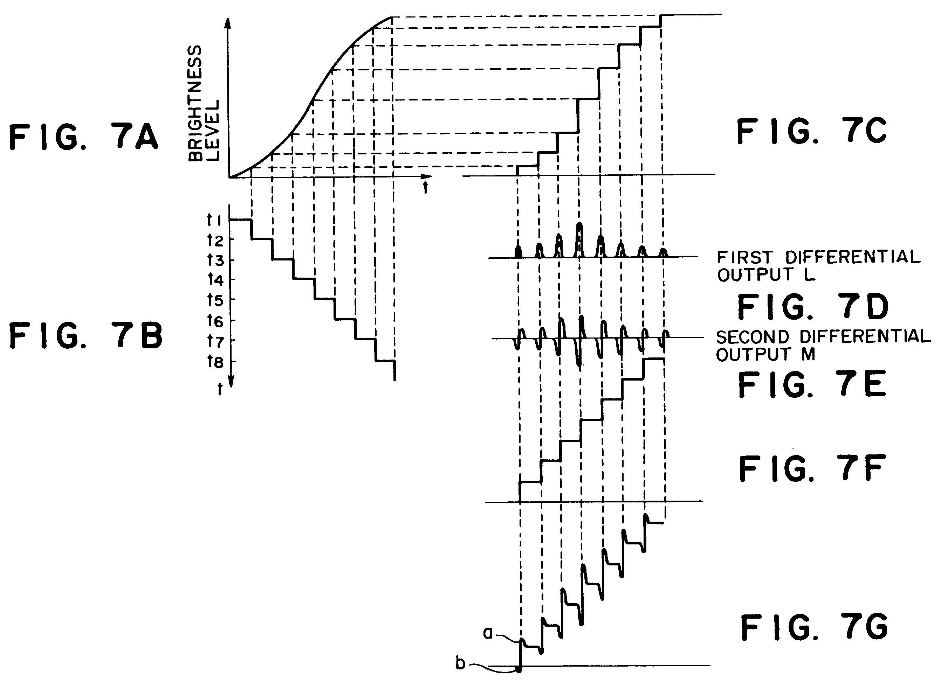

In FIG. 6, image input signal A (see FIG. 7B) is given the signal waveform as shown in FIG. 7C by the non-linear circuit 15 having the characteristics shown in FIG. 7A, amplified by amplifier 20, supplied to the outline signal extracting circuit 26 which is composed of differential circuits 21, 23 and an inverting amplifier 22, and a signal M with a waveform as shown by FIG. 7C is formed by said outline signal extracting circuit 26. On the other hand, input image signal A is delayed by the delay circuit 3 and supplied to adder 5.

The output signal M of the outline signal extracting circuit 26 (see FIG. 7E) and the output signal N of delay circuit 24 (see FIG. 7F) are supplied to adder 5 and by adding these two signals, the image signal P (see FIG. 7G) with outline correction is obtained. As shown in FIG. 7G, according to the present embodiment, overshoot (a in the Figure) and preshoot (b in the Figure) are added to the input image signal and thus it is possible to display the image with even better sharpness.

As described above, under the outline correction system for improvement of the picture quality of a TV receiver, the degeneration of apparent picture quality caused by a change of the size of the signal input, for example, over-emphasis of the outline in a dark scene or blooming phenomenon in a bright scene, is suppressed and in the ordinary case, dynamic outline correction is automatically executed such as sufficient outline emphasis and as the result, it is possible to always display an image with the preferred quality.

## Claims

1. An image signal processing apparatus comprising:
outline signal forming means (15,2; 15,20-23) responsive to an image signal (A) to form, from said image signal (A), an outline signal, or edge enhancement signal, (E;M) for emphasising the outline of the image represented by said image signal (A), said outline signal (E;M) having a peak amplitude smaller for an outline at dark or bright parts of said image than for an outline at a part of said image of intermediate brightness, wherein said outline signal (E;M) is output from said outline signal forming means (15,2; 15,20-23) with a delay relative to said image signal (A);
delay means (3) for delaying said image signal (A) by said delay ; and
adding means (5) for adding said outline signal (E;M) to the delayed image signal (F;N) output by said delay means (3);
characterised in that:
said outline signal forming means (15,2; 15, 20-23) comprises:
non-linear processing means (15), responsive to said image signal (A), for compressing its level at portions corresponding to dark parts and bright parts of said image, and for expanding its level at portions corresponding to parts of said image of intermediate brightness; and
outline signal extracting means (2; 20-23), responsive to the non-linearly processed image signal (A') output by said non-linear processing means (15), to form therefrom said outline signal (E;M).

2. Apparatus according to claim 1, wherein said outline signal extracting means (20-23) comprises:
a first differential circuit (21) to differentiate the non-linearly processed image signal (A') output by said non-linear processing means (15) to produce a differentiated image signal (L);
an inverting amplifier (22) to invert the differentiated image signal (L) to produce an inverted signal; and
a second differential circuit (23) to differentiate the inverted signal to form said outline signal (M).

3. A television receiver including an image signal processing apparatus as defined in either of claims 1 and 2.

## Patentansprüche

1. Gerät zur Verarbeitung von Bildsignalen mit
einer auf ein Bildsignal (A) ansprechenden Umrißliniensignal-Erzeugungseinrichtung (15, 2; 15, 20 - 23) zur Erzeugung eines Umrißliniensignals oder eines Kantenhervorhebungssignals (E; M) um die Umrißlinie des durch das Bildsignal (A) dargestellten Bildes aus dem Bildsignal (A) hervorzuheben, wobei das Umrißliniensignal (E; M) für eine Umrißlinie bei dunklen oder hellen Bereichen des Bildes einen geringeren Amplitudespitzenwert als für eine Umrißlinie bei einem Bereich des Bildes mit mittlerer Helligkeit aufweist, wobei das Umrißliniensignal (E; M) von der Umrißliniensignal-Erzeugungseinrichtung (15, 2; 15, 20 - 23) mit einer auf das Bildsignal (A) bezogenen Verzögerung ausgegeben wird,
einer Verzögerungseinrichtung (3) zum Verzögern des Bildsignals (A) um die Verzögerung, und
einer Addierereinrichtung (5) zum Addieren des Umrißliniensignals (E; M) zu dem von der Verzögerungseinrichtung (3) ausgegebenen verzögerten Bildsignal (F; N),
**dadurch gekennzeichnet, daß**
die Umrißliniensignal-Erzeugungseinrichtung (15, 2; 15, 20 - 23)
eine auf das Bildsignal (A) ansprechende nicht-lineare Verarbeitungseinrichtung (15) zur Kompression dessen Pegel in Bereichen, die dunklen Teilen und hellen Teilen des Bildes entsprechen, sowie zur Expansion dessen Pegel in Bereichen, die Teilen des Bildes mit mittlerer Helligkeit entsprechen, und
eine auf das von der nicht-linearen Verarbeitungseinrichtung (15) ausgegebene, nicht-linear verarbeitete Bildsignal (A') ansprechende Umrißliniensignal-Extraktionseinrichtung (2; 20 - 23) zur Erzeugung des Umrißliniensignal (E; M) daraus aufweist.

2. Vorrichtung nach Anspruch 1,
**dadurch gekennzeichnet, daß**
die Umrißliniensignal-Extraktionseinrichtung (20 - 23)
eine erste Differenziererschaltung (21) zur Differentiation des von der nicht-linearen Verarbeitungseinrichtung ausgegebenen, nicht-linear verarbeiteten Signals (A') zur Erzeugung eines einer Differentiation unterzogenen Bildsignals (L),
einen invertierenden Verstärker (22) zur Invertierung des einer Differentiation unterzogenen Bildsignals (L) zur Erzeugung eines invertierten Signals, und
eine zweite Differenziererschaltung (23) zur Differentiation des invertierten Signals zur Erzeugung des Umrißliniensignals (M) aufweist.

3. Fernsehempfänger mit einem Gerät zur Verarbeitung von Bildsignalen nach Anspruch 1 oder 2.

## Revendications

1. Dispositif de traitement de signal d'image comprenant :
des moyens (15,2;15,20-23) de formation d'un signal de contour en réponse à un signal d'image (A) pour former, à partir dudit signal d'image (A), un signal de contour ou signal d'accentuation de bord (E;M) pour accentuer le contour de l'image représentée par ledit signal d'image (A), ledit signal de contour (E;M) possédant une amplitude maximale plus faible pour un contour dans des parties sombres ou lumineuses de ladite image que pour un contour d'une partie de ladite image possédant une luminosité intermédiaire, ledit signal de contour (E;M) étant délivré par lesdits moyens (15,2;15,20-23) de formation du signal de contour avec un retard par rapport audit signal d'image (A) ;
des moyens de retardement (3) pour retarder, avec ledit retard, ledit signal d'image (A); et
des moyens additionneurs (5) pour additionner ledit signal de contour (E;M) et le signal d'image retardé (F;N) délivré par lesdits moyens de retardement (3);
caractérisé en ce que :
lesdits moyens (15,2;15,20-23) de formation du signal de contour comprennent :
des moyens de traitement non linéraire (15), aptes à répondre audit signal d'image (A), pour réduire son niveau dans des parties correspondant aux parties sombres et aux parties lumineuses de ladite image, et pour augmenter son niveau dans des parties correspondant à des parties de ladite image possédant une luminosité intermédiaire; et
des moyens (2;20-23) d'extraction du signal de contour aptes à répondre au signal d'image (A') traité de façon non linéaire, délivré par lesdits moyens de traitement non linéaire (15) pour former à partir de là ledit signal de contour (E;M).

2. Dispositif selon la revendication 1, dans lequel lesdits moyens (20-23) d'extraction du signal de contour comprennent :
un premier circuit différentiel (21) pour différentier le signal d'image (A') traité d'une manière non linéaire, délivré par lesdits moyens de traitement non linéaire (15) pour produire un signal d'image différentié (L);
un amplificateur inverseur (22) pour inverser le signal d'image différentié (L) pour produire un signal inversé; et
un second circuit différentiel (23) pour différentier le signal inversé de manière à former ledit signal de contour (M).

3. Récepteur de télévision contenant un dispositif de traitement de signal d'image tel que défini dans l'une ou l'autre des revendications 1 et 2.
